Europäisches Patentamt

European Patent Office

Office européen des brevets

(19)

(11) Publication number: **0 392 365**
**A2**

# EUROPEAN PATENT APPLICATION

(12)

(21) Application number: **90106553.2**

(22) Date of filing: **05.04.90**

(51) Int. Cl.5: **G10L 5/06**

(30) Priority: **13.04.89 JP 93604/89**

(43) Date of publication of application:
**17.10.90 Bulletin 90/42**

(84) Designated Contracting States:
**DE FR GB**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Koyama, Motoaki, c/o Intellectual**
**Property Div.**
**Kabushiki Kaisha Toshiba, 1-1 Shibaura**
**1-chome**
**Minato-ku, Tokyo 105(JP)**

(74) Representative: **Lehn, Werner, Dipl.-Ing. et al**
**Hoffmann, Eitle & Partner Patentanwälte**
**Arabellastrasse 4**
**D-8000 München 81(DE)**

(54) Speech recognition LSI system including recording/reproduction device.

(57) A speech recognition LSI system comprises a speech segment detector (12) for detecting a speech segment from a speech segment detected, a reference pattern memory (13) for storing reference patterns, and a speech recognition section (14, 15) for comparing the speech segment detected by the detector (12) with the reference patterns stored in the reference pattern memory (13) and select the reference pattern most similar to that of the speech segment. The system further comprises a recording/reproduction device (17) for recording the speech signal and reproducing only the speech segment the speech segment detector (12) has detected, so that an operator can hear the speech segment.

F I G. 1

The present invention relates to a speech recognition LSI system and, more particularly, to a speech recognition LSI system which can inform an operator of a detection error occurring in a given speech segment.

A speech recognition system includes an A-D converer, a speech analyzer, a speech segment detector, a matching circuit, and a speech recognition circuit. The A-D converter converts a speech signal to a digital signal in accordance with the frequency band of the speech signal. The digital signal is input to the speech analyzer, which outputs time-sequential data of the respective frequency band. The data is input to the speech segment detector. The detector detects a speech segment from that time-sequential data. The speech segment, detected by the speech segment detector, is supplied to the matching circuit. The matching circuit compares the speech segment with a large number of registered reference patterns, determines the similarities between the speech segment and the reference pattern data items, and outputs signals representing the similarities. The signals, output by the matching circuit, are supplied to the speech recognition circuit. This circuit processes these signals and outputs a data item representing the reference pattern most similar to the speech segment, as "recognized" data.

However, in the case of the above-described speech recognition system thus arranged, whether or not a speech recognition processing is correctly performed depends on whether or not the speech segment is correctly detected. A conventional speech segment detector detects, as a speech segment, any segment of time-sequential data that remain at a level equal to or higher than a reference level for a period longer than a predetermined period. Hence, the detector cannot detect a segment of the time-sequential data, which is either at too low a level or lasts too short, as a speech segment. Assume an operator utters the word "KITCHEN," such that the first syllable "KI" is too feeble, and the second syllable "TCHEN" is strong enough. In this case, those segments of the data which correspond to "KI" and "TCHEN" are at a level below, and a level above, the reference level, respectively. The detector cannot detects "KI" as a speech segment, and detects "TCHEN" only as a speech segment. The matching circuit, therefore, compares the speech segment corresponding to "TCHEN" only, with the reference patterns. The speech recognition circuit will inevitably recognize the reference pattern data item more similar to "TCHEN" than any other pattern data item, as one which represents the word "KITCHEN."

When the operator notices this recognition error, he or she needs to utter the same word "KITCHEN" again. However, he or she cannot know why the first uttered "KITCHEN" has not been recognized, and utters the word again, just in the same way as before. Consequently, the speech segment detector detects the speech segment corresponding to "TCHEN" but not the speech segment corresponding to "KI". Therefore, the operator cannot help but repeat the word "KITCHEN" until the system recognize this word. Obviously, the conventional speech recognition system has but an insufficient efficiency.

It is accordingly the object of the present invention to provide a speech recognition LSI system which can indicate to an operator a detection error in any given speech segment.

According to the present invention, there is provided a speech recognition LSI system comprising:

a speech segment detecting unit for detecting a speech segment from a speech signal;

reference pattern memory for storing reference patterns;

speech recognition unit for comparing the speech segment detected by the speech segment detecting unit with the reference patterns stored in the reference pattern memory, and for selecting the reference pattern most similar to the pattern of the speech segment detected by the speech segment detecting unit; and

recording/reproduction unit for recording the speech signal and reproducing only the speech segment detected by the speech segment detecting unit, under the control of the speech segment detecting unit.

In the speech recognition LSI system, the recording/reproduction unit records a speech signal and reproduce only the speech segment detecting unit has detected from the speech signal. Hence, an operator can understand which word has been recognized correctly, and which word has been recognized incorrectly. Then, he or she utter any incorrectly recognized word again, this time so aloud and distinctly that the detector detects all speech segments forming the word, and the speech recognition unit recognizes the word correctly. Hence, the operator need not repeat unrecognized word many times. Nor does the recognition unit need to perform its function many times to recognize each word the operator utters. The speech recognition LSI system can therefore recognize speech with high efficiency.

This invention can be more fully understood from the following detailed description when taken in conjunction with the accompanying drawings, in which:

Fig. 1 is a block diagram showing a speech recognition LSI system according to a first embodiment of the present invention;

Fig. 2 is an explanative view for explaining the detection operation principle of the speech segment detector used in the speech recognition LSI system shown in Fig. 1;

Fig. 3 is an explanative view for explaining an actual detection operation of the speech segment detector used in the speech recognition LSI system shown in Fig. 1;

Fig. 4 is a block diagram showing one form of the practical speech segment detector used in the speech segment detector shown in Fig. 1;

Fig. 5 is a block diagram showing one form of the practical recording/reproduction device used in the speech recognition LSI system shown in Fig. 1;

Fig. 6 is a block diagram showing a speech recognition LSI system according to a second embodiment of the present invention;

Fig. 7 is a block diagram showing a speech recognition LSI system according to a third embodiment of the present invention;

Fig. 8 is a block diagram showing a speech recognition LSI system according to a fourth embodiment of the present invention;

Fig. 9 is a block diagram showing a modification of the speech recognition LSI system shown in Fig. 1;

Fig. 10 is a block diagram showing a modified form of the speech recognition LSI system of the second embodiment of the invention, shown in Fig. 6;

Fig. 11 is a block diagram showing a modification of the speech recognition LSI system of the third embodiment of the invention shown in Fig. 7; and

Fig. 12 is a block diagram showing a modification of the speech recognition LSI system of the fourth embodiment of the invention.

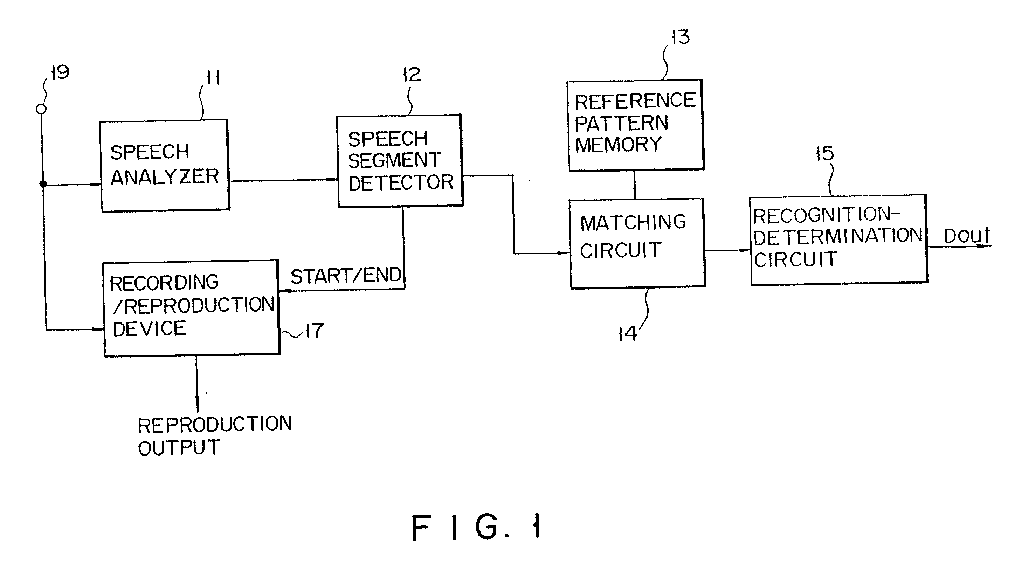

A speech recognition LSI system according to a first embodiment of the present invention will be explained below, with reference to Fig. 1.

This speech recognition LSI system comprises a speech analyzer 11, a speech segment detector 12, a reference pattern memory 13, a matching circuit 14, a recognition determination circuit 15, and a recording/reproduction device 17.

Speech uttered by an operator is converted to an analog speech signal by a microphone. The signal is amplified by amplifying device and supplied to an input terminal 19. The analog signal is supplied from the input terminal 19 to the speech analyzer 11, which separates the signal into six different frequency bands, performs analog-to-digital conversion in relation to each frequency band and delivers speech data for the respective frequency channels. The speech analyzer 11 also converts the analog speech signal directly to digital energy channel data which covers all frequency bands of the speech signal. Thus, the analyzer 11 supplies seven items of data to the speech segment detector 12, one for an energy channel, and six for six frequency channels.

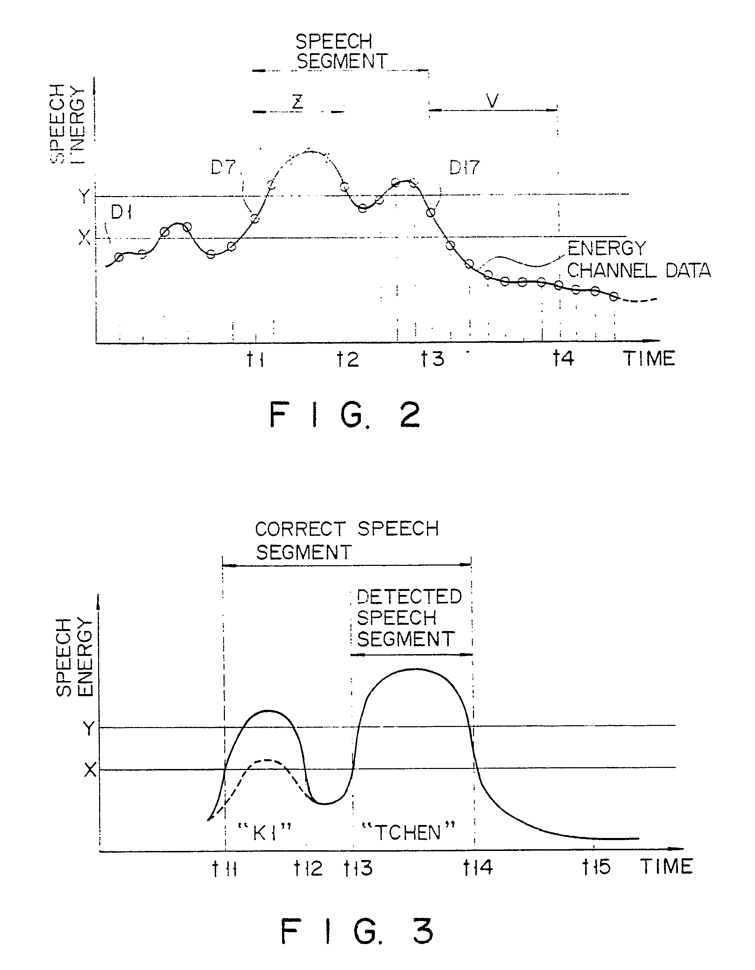

The speech segment detector 12 detects a speech segment from the speech data supplied from the speech analyzer 11 and supplies the segment to the matching circuit 14. The principle of detecting a speech segment by means of the speech segment detector 12 will be explained, with reference to Fig. 2.

The speech segment detector 12 selects, as a candidate start point of a speech segment, a point in time when data level of the energy channel exceeds a value X and determines the candidate start point as a true start point of the speech segment when the data level increases above the value X from a selected point of candidate start points over a continuous length of period exceeding a period Z, while cancelling a candidate start point when the data level decreases below the value X from that selected point of candidate start points within a period not exceeding the length of period Z. The speech segment detector 12 selects, as a candidate end point of a speech segment, a point in time when data level at an energy channel decreases below a value Y and determines that candidate end point as a true end point of the speech segment when the data level decreases from the selected point of candidate end points over a length of period exceeding a period V, while cancelling that candidate end point when the data level increases above the value Y before the period V is passed from the selected point of candidate end points.

In Fig. 2, the data level continuously exceeds the value X over the period Z extending from a time t1 when the data level at an energy channel exceeds the value X to a time t2 when the period Z is passed. For this reason, the time t1 is determined as a start point of a speech segment. Since the data level is continuously kept below the value Y over a time period extending from a time t3 when the data level decreases from the value Y to a time t4 when the period V is passed, the time t3 is determined as an end point of the speech segment.

In this way, the speech segment detector 12 (Fig. 1) detects a speech segment based on the data of the energy channel, and speech data of six frequency channels pertaining to the detected speech segment is supplied to the matching circuit 14.

Reference patterns corresponding to many words are initially registered in the reference pattern memory 13 as shown in Fig. 1. For one word, six reference patterns are prepared which correspond to six frequency channels. The matching circuit 14 compares, for every frequency channel, the speech data derived from the speech segment detector 12 and respective reference patterns registered in the reference pattern memory 13 and calculates a similarity level for the six channels. A comparing operation of the speech data is sequentially made against all the reference patterns which have been registered in the reference pattern memory 13.

The recognition determining circuit 15 selects a reference pattern to be output as recognition result data Dout, on the basis of the mean similarity for the channels of the respective reference patterns which are calculated at the matching circuit 14. Of those reference patterns which are registered in the reference pattern memory 13, a reference pattern of the highest similarity is selected as the recognition result data Dout.

The recording/reproduction device 17 receives a speech signal via the input terminal 19 to allow it to be recorded or reproduced. The reproduction operation of the recording/reproduction device 17 is controlled by start and end addresses which are supplied from the speech segment detector 12. The start address indicates specific data which, after the start of detecting speech segments by the speech segment detector 12, is input to the speech segment detector 12 at a specific point in time corresponding to a real start point of the speech segment. In the example of Fig. 2, data D7 at the time t1 corresponding to the start point of the speech segment is input to the speech segment detector 12 at the seventh time position and, in this case, the value of the start address indicates to "7". On the other hand, the end address indicates specific data which, after the start of detecting speech segments by the speech segment detector 12, is input to the speech segment detector at a specific point in time corresponding to a real end point of the speech segment. In the example of Fig. 2, data D17 at time corresponding to the end point of the speech segment is input to the speech segment detector 12 at the seventeenth time position and, in this case, the value of the end address indicates to "17".

In this way, the reproducing operation of the recording/reproduction device 17 is controlled by the start and end addresses for defining the speech segment and, by doing so, the recording/reproduction device 17 reproduces only a speech signal belonging in the speech segment detected by the speech segment detector 12. If there occurs any detection error for the speech segment, the recording/reproduction device 17 reproduces only a speech signal belonging in that speech segment actually detected, enabling the occurrence of such detection error in that speech segment to be informed to an operator.

Here let it be assumed that a "KI" in a word "KITCHIN" is feebly uttered by the operator, and that only the data corresponding to the syllable "TCHEN" is detected, the data of the "KI" is not detected as a speech segment. In this case, a data level of an energy channel corresponding to the "KI" falls much as is indicated by the dotted lines in Fig. 3. Instead of selecting the time tll initially as a start point of that speech segment, the time t13 at which the data level corresponding to the "TCHEN" initially exceeding the value X will be selected as the start point of the speech segment. As a result, that speech segment detected by the speech segment detector 12 ranges from the time t13 to the time t14.

In this case, the recording/reproduction device 17 reproduces only a speech signal recorded over a time length from the time t13 to the time t14. Hence, the speech portion corresponding to "TCHEN" is faded back to the operator. Since the operator can recognize that detection error at any detection segment, if he or she again utters the same word carefully, there is a higher probability that, this time, the corresponding speech segment will be correctly detected.

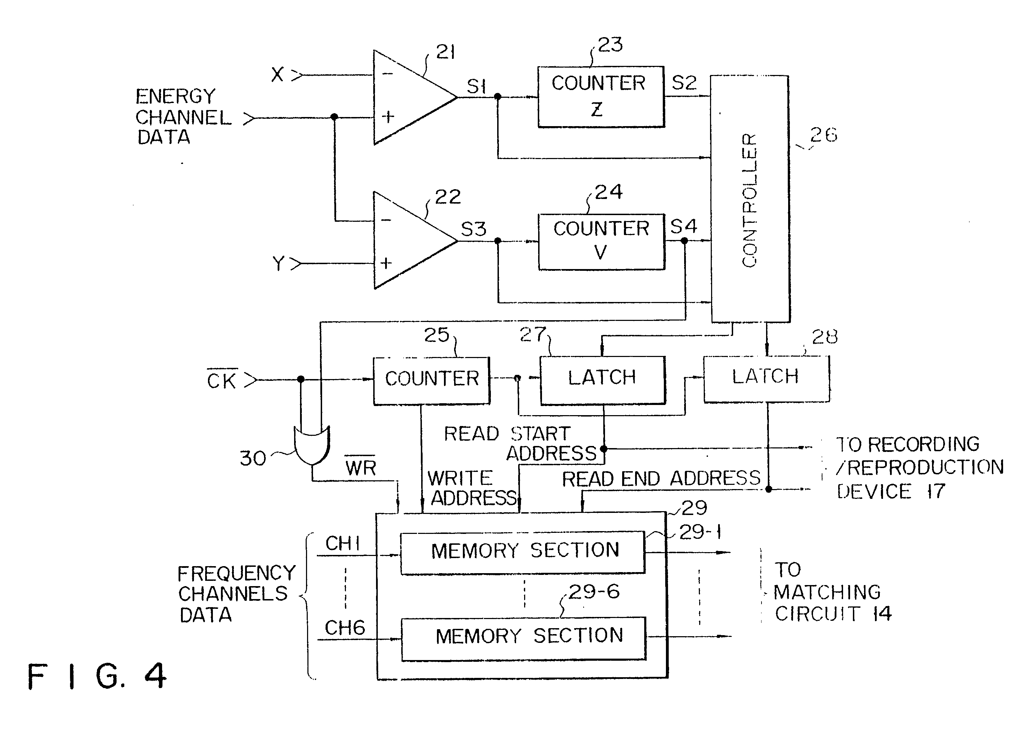

Fig. 4 shows one form of a practical speech segment detector 12 as shown in Fig. 1. The speech segment detector shown in Fig. 4 comprises comparators 21, 22, counters 23, 24, 25, controller 26, latch circuits 27, 28, memory unit 29 and OR gate 30.

The comparator 21 receives a speech channel data and value X and generates a candidate start point detection signal S1 of a logic "1" level when it receives speech energy channel data higher in value than the value X. The counter 23 supplies a start point determination signal S2 of a "1" level to the controller 26 when it uninterruptedly receives a candidate start point detection signal of a logic "1" level over a time period Z. The comparator 22 receives the speech energy channel data and value Y and generates a candidate end point detection signal S3 of a logic "1" level when it receives speech energy channel data smaller in value than the value Y. The counter 24 supplies a candidate end point determination signal S4 of a logic "1" level to the controller 26 when it uninterruptedly receives the candidate end point detection signal S3 of a logic "1" level over the period of time Z.

The counter 25 counts the number of clock pulses $\overline{CK}$ while frequency channel data is being supplied in synchronization with the clock pulses $\overline{CK}$ from the speech analyzer 11 to the speech segment detector 12. The count value is supplied to the latch circuits 27 and 28, and also to the memory unit 29 as an write address.

The controller 26 latches the count value of the counter 25 to the latch circuit 27 each time it receives the candidate start point detection signal S1. The controller 26 reads out, upon receipt of the start point determination signal S2 of a logic "1" level, the latched value of the latch circuit 27 at that time and transmits it from the latch circuit 27 to the memory unit 29 as a read start address. Furthermore, the controller 26 latches, upon each receipt of a candidate end point detection signal S3 of a logic "1" level, a count value of the counter 25 at that time to the latch circuit 28. Upon receipt of a final point determination signal S4 of the "1" level, the controller 26 transmits the value latched by the latch circuit 28, as a read end address, from the latch circuit 28 to the memory unit 29.

The OR gate 30 generates a write enabling signal $\overline{WR}$ in accordance with a clock pulse signal $\overline{CK}$ and an end point determination signal S4 of the counter 24. That is, with the end point determination signal of the "1" level not delivered from the counter 24, a write enable signal $\overline{WR}$ of a "0" level is generated in synchronization with the clock pulse signal $\overline{CK}$ so that a write mode may be set. With the end point determination signal S4 of the "1" level delivered from the counter 24, the OR gate 30 generates a write enable signal $\overline{WR}$ of the "1" level, irrespective of the clock pulse $\overline{CK}$, so as to achieve a read mode.

The memory unit 29 includes six memory sections 29-1 to 29-6 which correspond to six frequency channels CH1 to CH6 delivered as respective data from the speech analyzer 11. In the write mode, addresses are counted up in accordance with the number of occurrences of the clock pulse signals $\overline{CK}$ and the data of the frequency channels CH1 to CH6 are sequentially written into the memory sections 29-1 to 29-6. In the read mode, on the other hand, the data items in an address range which is designated by a read start address and read end address from the latch circuits 27 and 28 are respectively read out from the memory sections 29-1 to 29-6. Here the read start address and read end address correspond to the start and end points of the speech segment, and those read out of the memory sections 29-1 to 29-6 are only data items belonging in the speech segment.

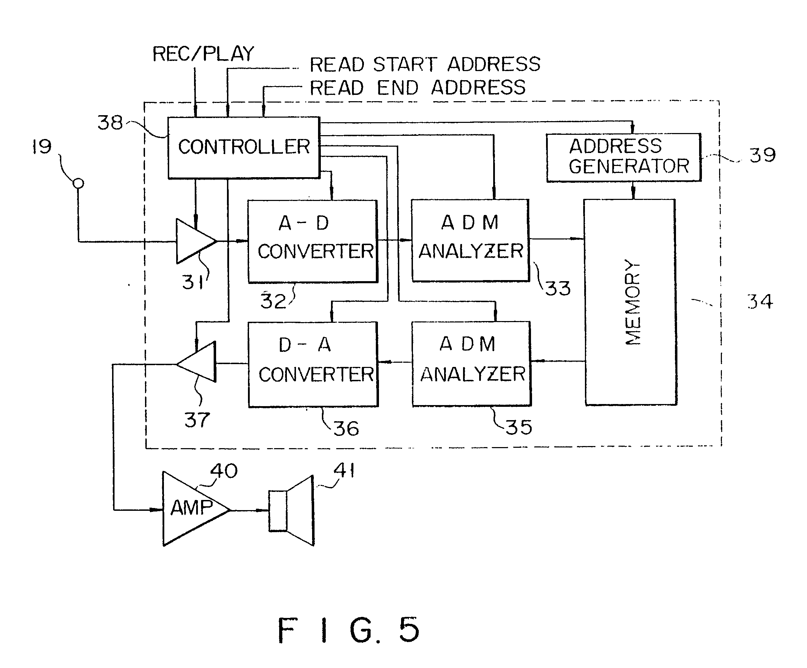

Fig. 5 shows one form of a practical recording/reproduction device 17 shown in Fig. 1. The recording/reproduction device 17 as shown in Fig. 5 includes an input buffer 31, an A-D converter 32, an ADMC adaptive delta modulation analyzer 33 for data compression, a memory 34, an ADM analyzer 35 for data expansion, a D-A converter 36, an output buffer 37, a controller 38, an address generator 39, an amplifier 40 and a speaker 41. Here the input buffer 31, A-D converter 32, ADM analyzer 33, memory 34, ADM analyzer 35, D-A converter 36, output buffer 37, controller 38 and address generator 39 are all built up on one LSI chip, and the amplifier 40 and speaker 41 are provided outside the LSI chip.

The controller 38 controls an operation of the recording/reproduction device 17 in accordance with a recording/reproduction switching signal REC/PLAY coming from an outside. In the recording mode, the controller 38 sets the input buffer 31, A-D converter 32 and ADM analyzer 33 in an active state and enables the address generator 39 to generate a serial address. In the reproduction mode, on the other hand, the controller 38 controls the address generator 39 to enable the ADM analyzer 35, D-A converter 36 and output buffer 37 to be placed in an active state and, control the address generator 39 so that only data corresponding to an address range designated by the read start and read end address from the speech segment detector 12 is read out of the memory 34.

In the recording mode, an analog signal from an input terminal 19 is supplied via an input buffer 31 to the A-D converter 32 where it is converted to a digital signal. The output of the A-D converter 32, being compressed by the ADM analyzer 33, is written into the memory 34. Of those data items written into the memory 34, only that data belonging in the address range designated by the read start and read end address is read out of the memory 34 in a reproduction mode. The data thus read, being expanded by the ADM analyzer 35, is converted by the D-A converter 36 to an analog signal. The output of the D-A converter 36 is delivered via the output buffer 37 and amplifier 40 to the speaker 41 where it is reproduced as a speech. The reproduced speech corresponds to only the speech belonging in the speech segment actually detected by the speech segment detector 12.

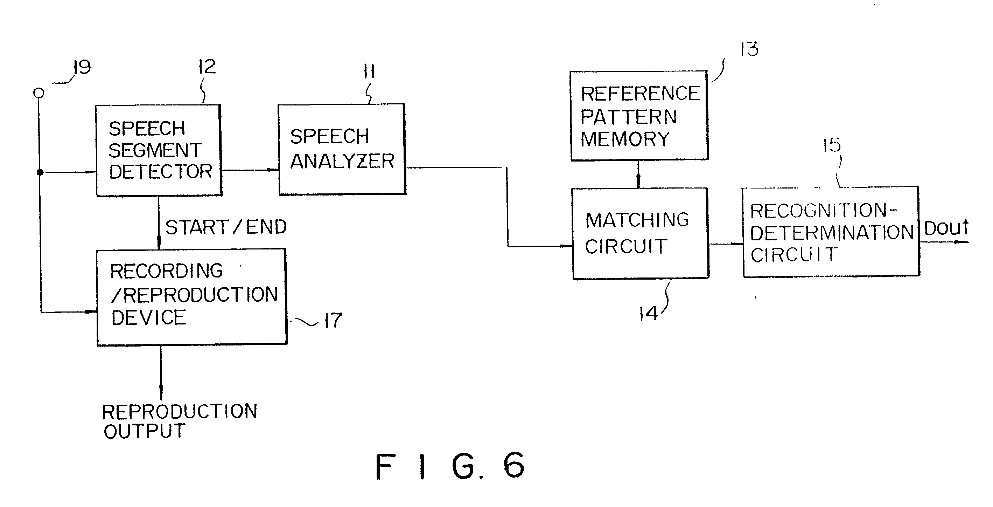

A speech recognition LSI system according to a second embodiment of the present invention will be explained below with respect to Fig. 6. The second embodiment shown is similar to the first embodiment shown in Fig. 1 except that a speech segment detector 12 is provided at a preceding stage of a speech analyzer 11.

In the second embodiment, the speech segment detector 12 detects a speech segment from an analog speech signal supplied from an input terminal 19 and supplies the speech segment to the analyzer 11. Also in the second embodiment, it is only the speech segment detected by the speech segment detector 12 that a recording/reproduction device 17 reproduces. Hence, the operator can hear the speech segment actually detected as in the first embodiment.

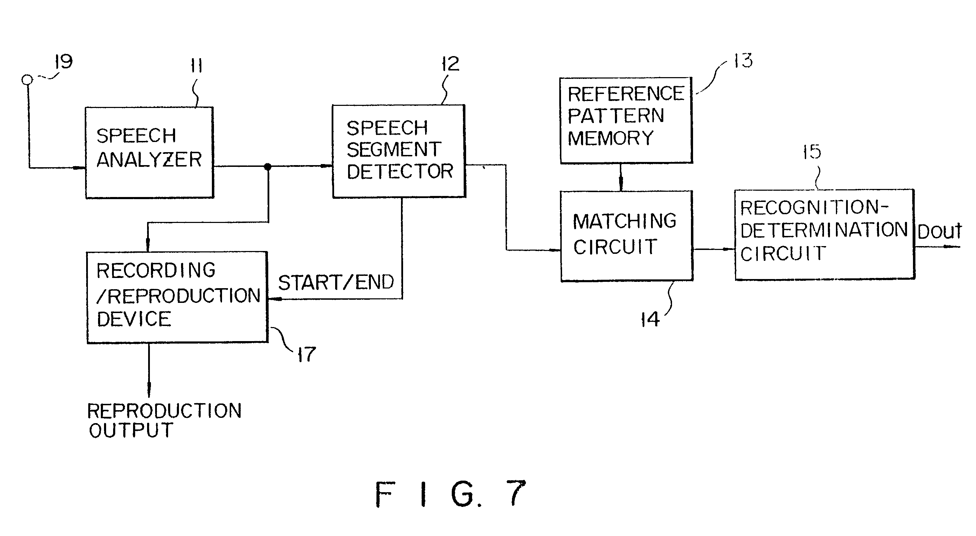

Fig. 7 shows a speech recognition LSI system according to a third embodiment of the present invention. The third embodiment is similar to the first embodiment, except that the recording/reproduction device 17 records digital signal output from the speech analyzer 11, not the analog speech signal supplied from an input terminal 19. In the third embodiment shown in Fig. 7, the recording/reproduction device 17 reproduces only the speech segment the detector has actually detected.

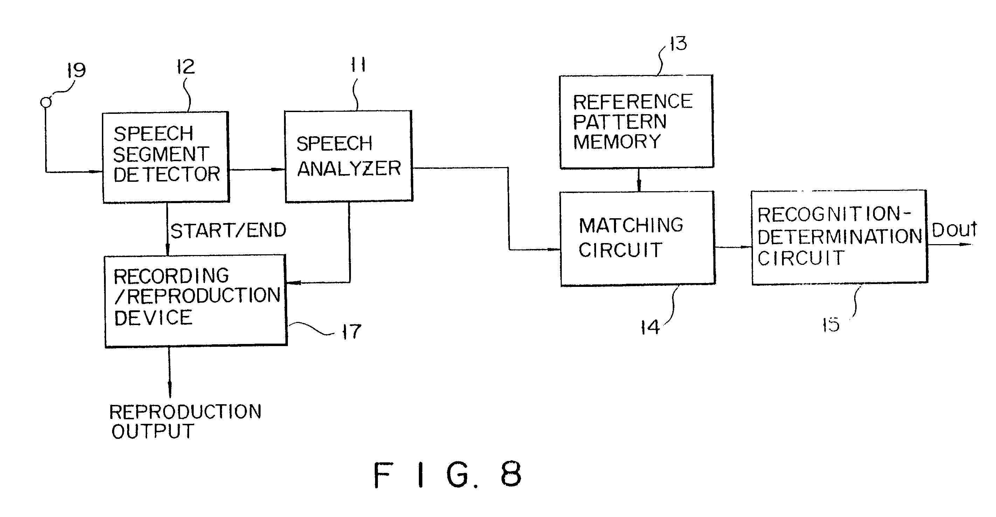

Fig. 8 shows a speech recognition LSI system according to a fourth embodiment of the present invention. In the fourth embodiment, a speech segment detector 12 is provided at a preceding stage of the speech analyzer 11 as in the second embodiment shown in Fig. 6 and a speech signal, input to a recording/reproduction device 17, is a digital speech signal supplied from the speech analyzer 11, as in the third embodiment shown in Fig. 7.

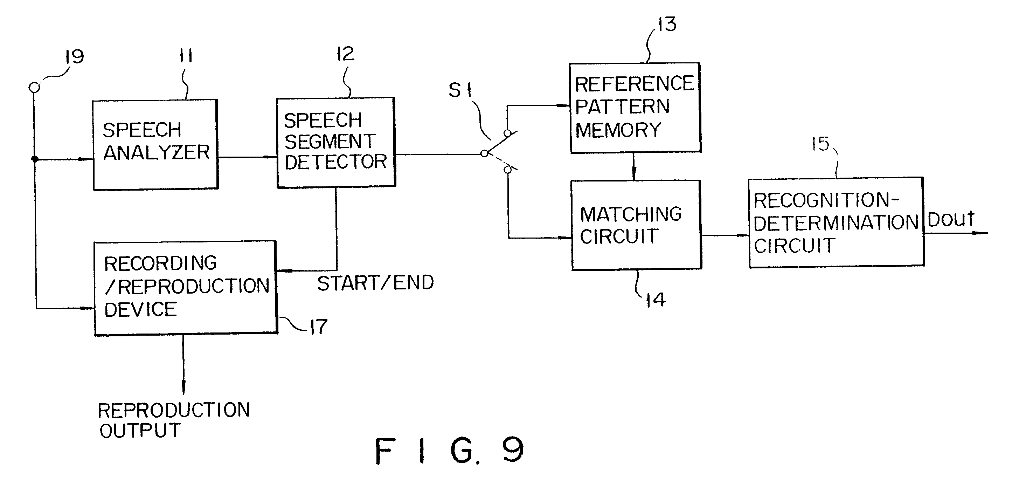

Fig. 9 shows a modification of the first embodiment. The LSI system as shown in Fig. 9 includes a switch S1 for making a switching between a speech recognition mode and a speech registration mode.

When the switch S1 is connected to a reference pattern memory 13 side as indicated by a solid line in Fig. 9, the speech recognition LSI system is set to a speech registration mode and, in the speech registration mode, six frequency channel data which is output from a speech segment detector 12 is registered in the reference pattern memory 13 as a reference pattern corresponding to one word. In the speech registration mode, operator can understand which word has been registered in the reference pattern memory 13 correctly, and which word has been registered in the reference pattern memory 13 incorrectly, by means of the recording/reproduction device 17. When, on the other hand, the switch S1 is connected to a matching circuit 14 side as indicated by a broken line in Fig. 9, the speech recognition LSI system is set to a speech recognition mode and performs the aforementioned recognition operation as already set forth with reference to Fig. 1.

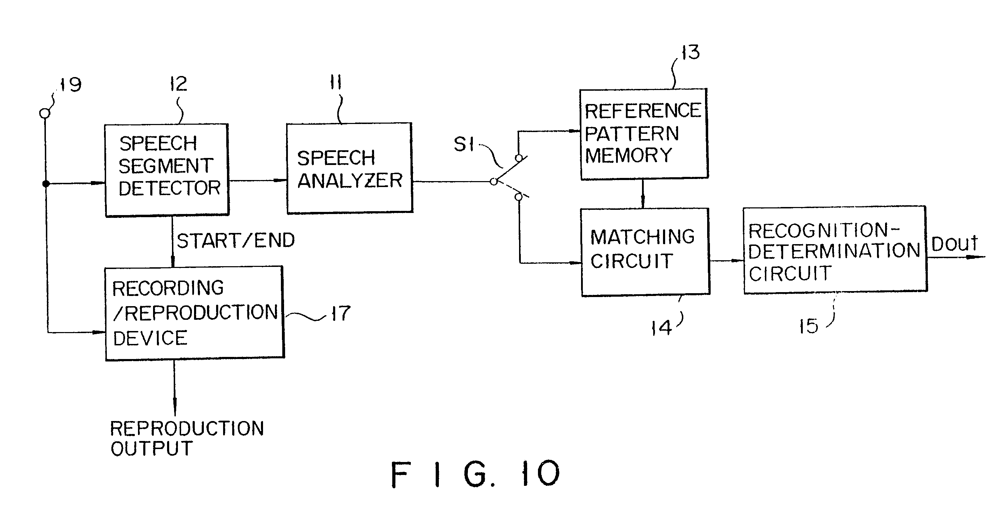

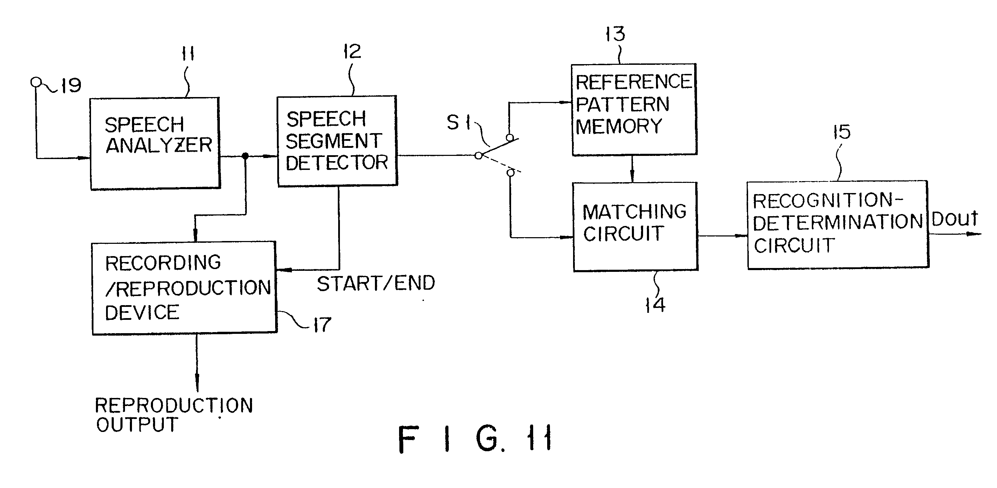

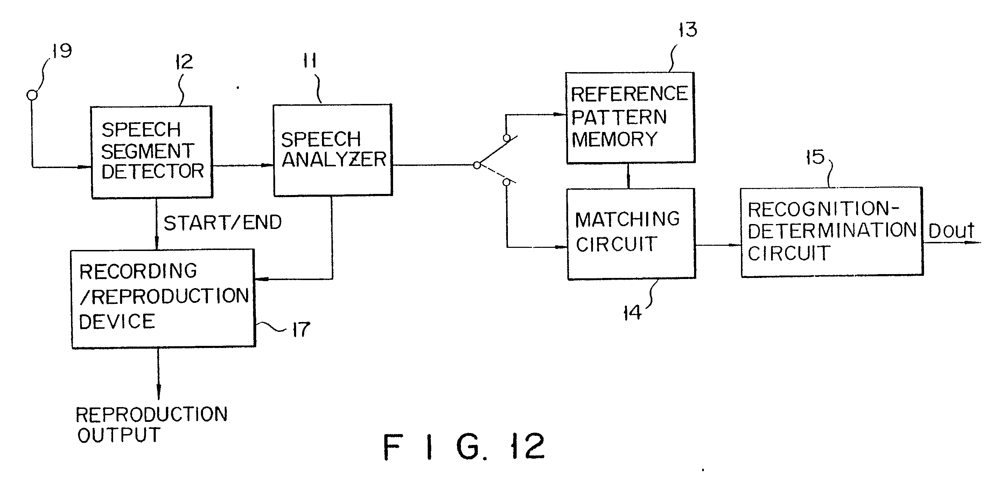

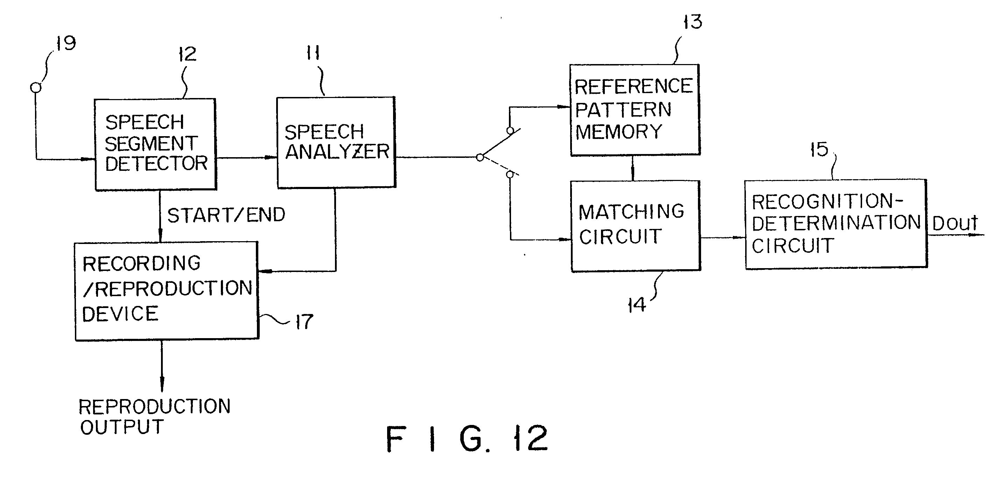

Figs. 10, 11 and 12 show varied forms of a speech recognition LSI system. The respective variant includes a switch S1 for making a switching between a speech recognition mode and a speech registration mode as in the case of the system shown in Fig. 9.

As evident from the aforementioned explanation, in the speech recognition LSI system of the present invention, the recording/reproduction device 17 reproduces a speech segment detected by the speech segment detector 12. The speech segment detected by the speech segment detector 12 can be indicated to the operator, and the operator can know whether or not any speech segment has been detected. If the operator finds a speech segment not detected, he or she again utters a speech so aloud that speech segments can be detected, the speech can be recognized this time. The operator need not repeat the speech until the speech is correctly recognized.

Reference signs in the claims are intended for better understanding and shall not limit the scope.

## Claims

1. A speech recognition LSI system comprising speech segment detecting means (12) for detecting a speech segment from a speech signal, reference pattern memory means (13) for storing reference patterns, and speech recognition means (14, 15) for comparing the speech segment detected by the speech segment detecting means (12) with the reference patterns stored in the reference pattern memory means (13) and for selecting the reference pattern most similar to that of the speech segment, characterized by further comprising recording/reproduction means (17) for recording the speech signal and reproducing only the speech segment detected by said detecting means (12).

2. The system according to claim 1, characterized in that said speech signal is an analog signal.

3. The system according to claim 2, characterized by further comprising speech analyzing means (11), provided at a preceding stage of said speech segment detecting means (12), for converting the analog signal to a digital speech signal in accordance with the frequency of the analog signal and for delivering the digital speech signal as an output signal.

4. The system according to claim 3, characterized in that said speech segment detecting means (12) detects a speech segment from the digital speech signal.

5. The system according to claim 2, characterized in that said speech segment detecting means (12) receives said analog speech signal, detects a speech segment from the analog speech signal.

6. The system according to claim 5, characterized by further comprising a speech analyzing means (11), provided at a subsequent stage of said speech segment detecting means (12), for converting an analog speech signal to a digital speech signal in accordance with the frequency of the digital speech signal and for delivering the digital signal as an output signal.

7. The system according to claim 2, characterized in that said recording/reproduction means (17) records said analog speech signal.

8. The system according to claim 3, characterized in that said recording/reproduction means (17) receives and records a digital speech signal supplied from said speech analyzing means 11.

9. The system according to claim 6, characterized in that said recording/reproduction means (17) receives and records the digital speech signal supplied from said speech analyzing means (11).

10. The system according to claim 1, characterized by further comprising switch means (S1) for switching the output of said speech segment detecting means (12) to said reference pattern memory means (13) or said speech recognition means (14, 15).

11. The system according to claim 6, characterized by further comprising switch means (S1) for switching the output of said speech segment detecting means (12) to said reference pattern memory means (13) or said speech recognition means (14, 15).

F I G. 1

EP 0 392 365 A2

SPEECH
SEGMENT

SPEECH ENERGY

Z

V

D7

D17

Y

D1

X

ENERGY
CHANNEL DATA

t1    t2    t3    t4    TIME

# F I G. 2

CORRECT SPEECH
SEGMENT

SPEECH ENERGY

DETECTED
SPEECH
SEGMENT

Y

X

"K I"    "TCHEN"

t11    t12    t13    t14    t15    TIME

# F I G. 3

F I G. 4

EP 0 392 365 A2

REC/PLAY    READ START ADDRESS
            READ END ADDRESS

38 CONTROLLER

ADDRESS
GENERATOR    39

19

31

A - D
CONVERTER
32

A D M
ANALYZER
33

MEMORY    34

D - A
CONVERTER
36

A D M
ANALYZER
35

37

40 AMP    41

F I G. 5

EP 0 392 365 A2

F I G. 6

EP 0 392 365 A2

F I G. 7

EP 0 392 365 A2

F I G. 8

EP 0 392 365 A2

F I G. 9

SPEECH ANALYZER 11

SPEECH SEGMENT DETECTOR 12

REFERENCE PATTERN MEMORY 13

MATCHING CIRCUIT 14

RECOGNITION-DETERMINATION CIRCUIT 15

RECORDING /REPRODUCTION DEVICE 17

START/END

REPRODUCTION OUTPUT

Dout

S1

19

F I G. 10

F I G. 11

F I G. 12

EP 0 392 365 A2

F I G. 12

EP 0 392 365 A2